# EUROPEAN PATENT APPLICATION

(11) **EP 4 657 741 A1**
(43) Date of publication of application: **03.12.2025**
(21) Application number: 24747146.9
(22) Date of filing: 15.01.2024
(51) Int. Cl.: H02M 7/48, H02K 11/30

(54) **VEHICLE DRIVE DEVICE**

(30) Priority: 25.01.2023 JP 2023009274
(71) Applicant: AISIN CORPORATION, Kariya-shi, Aichi 448-8650 (JP)
(72) Inventor: KOASHI Hidefumi, Kariya-shi, Aichi 448-8650 (JP)
(74) Representative: TBK
(86) International application number: PCT/JP2024/000747
(87) International publication number: WO 2024/157815

(57) **Abstract**

There is disclosed a vehicle drive device including: a rotary electric machine; a plurality of modules arranged on one side, in an axial direction, of the rotary electric machine and arranged in an annular configuration about an axis, the plurality of modules forming an inverter device, the plurality of modules being provided two or more for each phase; a plurality of bus bars connecting the plurality of modules to the rotary electric machine, the plurality of bus bars being provided one or more for each of the plurality of phases; and current sensors each provided for a corresponding one of the plurality of bus bars each for a corresponding one of three phases. The plurality of modules of the same phase are adjacently arranged in a circumferential direction to form each single-phase module group. Each bus bar and each current sensor, each for the corresponding one of the phases, are arranged in a corresponding different one of a plurality of the inter-phase inter-module spaces that are gaps in the circumferential direction between the plurality of single-phase module groups.

## Description

### TECHNICAL FIELD

The present disclosure relates to a vehicle drive device.

### BACKGROUND ART

There is a known technique of arranging a plurality of modules forming an inverter device around a central axis of a rotary electric machine as viewed in an axial direction.

### CITATION LIST

### PATENT LITERATURE

Patent Literature 1: JP 2020-025450 A

### SUMMARY OF INVENTION

### TECHNICAL PROBLEMS

However, in such a conventional technique as described above, current sensors that detect currents flowing through bus bars of respective phases tend to be gathered at one place on a radially outer side relative to the plurality of modules and in a circumferential direction around the axis (a circumferential direction about the axis). In such an arrangement, reliability for sensor information from the current sensor is likely to decrease due to reception of influence of disturbance from other phases.

Therefore, in one aspect, the present disclosure increases reliability of current sensors for respective phases, in a configuration in which a plurality of modules forming an inverter device are arranged in an annular configuration about an axis.

### SOLUTION TO PROBLEMS

In one aspect, there is provided a vehicle drive device including:
a rotary electric machine having a rotation axis on an axis;
a plurality of modules arranged on one side, in an axial direction, of the rotary electric machine and arranged in an annular configuration about the axis, the plurality of modules forming an inverter device configured to supply alternating-current power of a plurality of phases to the rotary electric machine, the plurality of modules being provided two or more for each of the plurality of phases;
a plurality of bus bars connecting the plurality of modules to the rotary electric machine, the plurality of bus bars being provided one or more for each of the plurality of phases; and
current sensors each provided for a corresponding one of the plurality of bus bars each for a corresponding one of the plurality of phases, the current sensors each being configured to generate an electric signal corresponding to a current flowing through the corresponding one of the plurality of bus bars,
in which
the plurality of modules of a same one of the plurality of phases are adjacently arranged in a circumferential direction to form a single-phase module group, and
each of the plurality of bus bars and each of the current sensors, each for a corresponding one of the plurality of phases, are arranged in a corresponding different one of a plurality of inter-phase inter-module spaces that are gaps in the circumferential direction between a plurality of the single-phase module groups.

### ADVANTAGEOUS EFFECTS OF INVENTION

In one aspect, according to the present disclosure, it is possible to increase reliability of current sensors for respective phases, in a configuration in which a plurality of modules forming an inverter device are arranged in an annular configuration about an axis.

### BRIEF DESCRIPTION OF DRAWINGS

FIG. 1 is a schematic diagram of an example of an electric circuit including a rotary electric machine according to the present embodiment.
FIG. 2 is a skeleton diagram of a vehicle drive system including the rotary electric machine according to the present embodiment.
FIG. 3A is a cross-sectional view schematically showing relevant part of a vehicle drive device according to the present embodiment.
FIG. 3B is a cross-sectional view schematically showing relevant part of the vehicle drive device according to the present embodiment.
FIG. 4 is a perspective view of a motor drive device according to the present embodiment as viewed from an X1 side.
FIG. 5 is an explanatory view of each component of the motor drive device according to the present embodiment.
FIG. 6 is a perspective view of one output bus bar in a state of being shown alone.
FIG. 7 is a plan view showing part on an outer side in an axial direction relative to the rotary electric machine 1, in the vehicle drive device according to the present embodiment, as viewed in the axial direction.
FIG. 8 is a plan view in which components of an electric system mainly remain shown while other components are omitted, with respect to the view shown in FIG. 7.
FIG. 9 is a cross-sectional view as taken along an XZ plane passing through a current sensor, in and in the vicinity of part Q7 in FIG. 7.

### DESCRIPTION OF EMBODIMENTS

Hereinafter, embodiments will be described in detail with reference to the accompanying drawings. Note that the dimensional ratios in the drawings are merely examples, and the dimensional ratios are not limited thereto, and shapes and the like in the drawings may be partially exaggerated for convenience of description. In addition, in the drawings, for a plurality of parts or portions having the same attribute, reference signs may be given only to one or some of the plurality of parts or portions, for ease of viewing.

Hereinafter, general description will be given on an electric system (control system) of a vehicle drive device 10 of the present embodiment and the overall drive system including the vehicle drive device 10 of the present embodiment, and then detail description will be given on the vehicle drive device 10 of the present embodiment.

### [Electric System of Vehicle Drive Device]

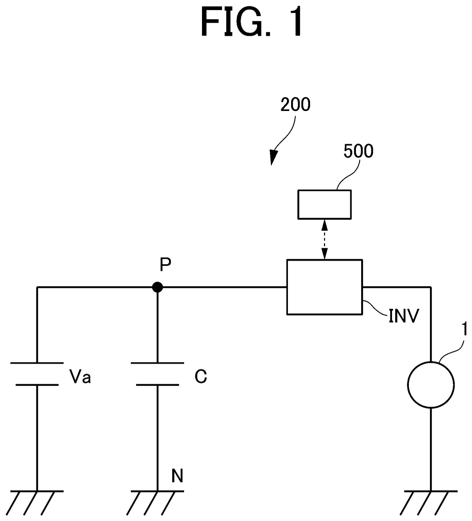

FIG. 1 is a schematic diagram of an example of an electric circuit 200 including a rotary electric machine 1. FIG. 1 also shows a control device 500. In FIG. 1, arrows with a dotted line associated with the control device 500 represent exchange of information (signals and data).

The rotary electric machine 1 is driven through control of an inverter INV performed by the control device 500. In the electric circuit 200 shown in FIG. 1, the rotary electric machine 1 is electrically connected to a power supply Va through the inverter INV. Note that the inverter INV includes, for example, power switching elements (each is, for example, a metal-oxide-semiconductor field effect transistor: MOSFET, an insulated gate bipolar transistor: IGBT, or the like) on a high potential side P and a low potential side N of the power supply Va, for each phase, and the power switching element on the high potential side P and the power switching element on the low potential side N form upper and lower arms. Note that the inverter INV may include a plurality of sets of upper and lower arms for each phase. Each power switching element may be driven with pulse width modulation (PWM) to generate a desired rotational torque, under the control of the control device 500. Note that the power supply Va is, for example, a battery with a relatively high rated voltage, and may be, for example, a lithium-ion battery, a fuel cell, or the like.

In the present embodiment, as in the electric circuit 200 shown in FIG. 1, a smoothing capacitor C is electrically connected in parallel with the inverter INV between the high potential side P and the low potential side N of the power supply Va. Note that a plurality of sets of smoothing capacitors C may be electrically connected in parallel with each other between the high potential side P and the low potential side N of the power supply Va. In addition, a DC/DC converter may be provided between the power supply Va and the inverter INV.

### [Overall Drive System]

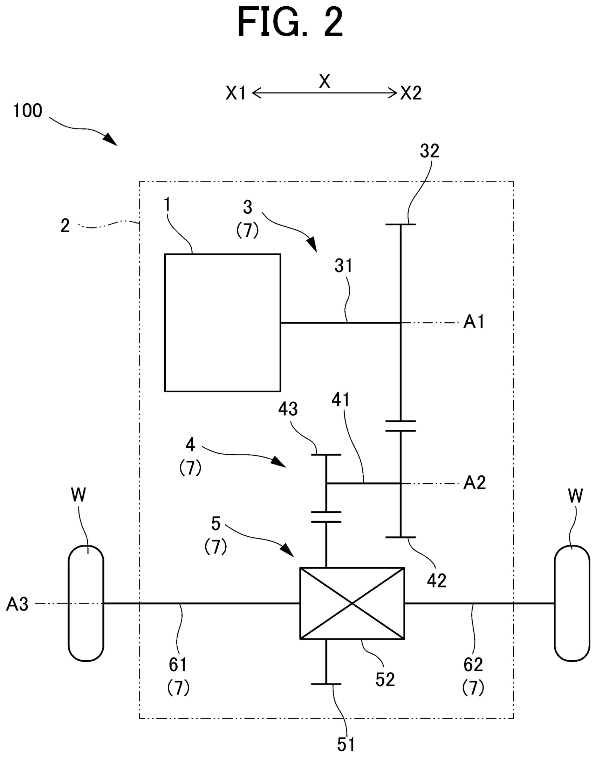

FIG. 2 is a skeleton diagram of a vehicle drive system 100 including the rotary electric machine 1. In FIG. 2, an X-direction, and an X1 side and an X2 side along the X-direction are defined. The X-direction is parallel to the direction of a first axis A1 (hereinafter, also referred to as "axial direction").

In the example shown in FIG. 2, the vehicle drive system 100 includes the rotary electric machine 1 serving as a drive source of wheels W, and a drive transmission mechanism 7 provided in a power transmission path connecting the rotary electric machine 1 and the wheels W. The drive transmission mechanism 7 includes an input member 3, a counter gear mechanism 4, a differential gear mechanism 5, and left and right output members 61, 62.

The input member 3 includes an input shaft 31 and an input gear 32. The input shaft 31 is a rotary member that rotates around the first axis A1. The input gear 32 is a gear that transmits, to the counter gear mechanism 4, rotational torque (driving force) from the rotary electric machine 1. The input gear 32 is coupled to the input shaft 31 of the input member 3 to rotate integrally with the input shaft 31 of the input member 3.

The counter gear mechanism 4 is disposed between the input member 3 and the differential gear mechanism 5 in the power transmission path. The counter gear mechanism 4 includes a counter shaft 41, a first counter gear 42, and a second counter gear 43.

The counter shaft 41 is a rotary member that rotates around a second axis A2. The second axis A2 extends parallel to the first axis A1. The first counter gear 42 is an input element of the counter gear mechanism 4. The first counter gear 42 meshes with the input gear 32 of the input member 3. The first counter gear 42 is coupled to the counter shaft 41 to rotate integrally with the counter shaft 41.

The second counter gear 43 is an output element of the counter gear mechanism 4. In the present embodiment, as an example, the second counter gear 43 is formed to have a diameter smaller than the diameter of the first counter gear 42. The second counter gear 43 is coupled to the counter shaft 41 to rotate integrally with the counter shaft 41.

The differential gear mechanism 5 is disposed on a third axis A3 serving as a rotation axis thereof. The third axis A3 extends parallel to the first axis A1. The differential gear mechanism 5 distributes, to the left and right output members 61, 62, a driving force transmitted from the rotary electric machine 1 side. The differential gear mechanism 5 includes a differential input gear 51, and the differential input gear 51 meshes with the second counter gear 43 of the counter gear mechanism 4. The differential gear mechanism 5 also includes a differential case 52, and the differential case 52 houses a pinion shaft, a pinion gear, left and right side gears, and the like. The left and right side gears are coupled to rotate integrally with the left and right output members 61, 62, respectively.

The left and right output members 61, 62 are drivingly coupled to the left and right wheels W, respectively. The respective left and right output members 61, 62 transmit, to the wheels W, the driving force distributed by the differential gear mechanism 5. Note that each of the left and right output members 61, 62 may include two or more members.

In this manner, the rotary electric machine 1 causes the wheels W to be driven through the drive transmission mechanism 7. However, in another embodiment, the rotary electric machine 1 may be disposed in a wheel as an in-wheel motor. In this case, the vehicle drive system 100 may be configured not to include the drive transmission mechanism 7. Further, in another embodiment, a plurality of rotary electric machines 1 may be provided that share a part or an entirety of the drive transmission mechanism 7.

### [Details of Vehicle Drive Device]

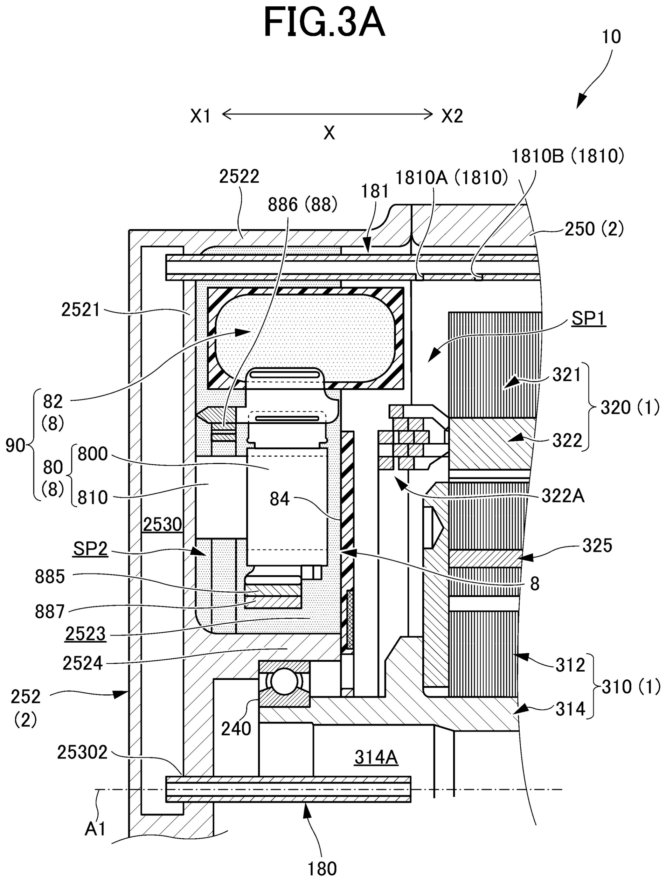

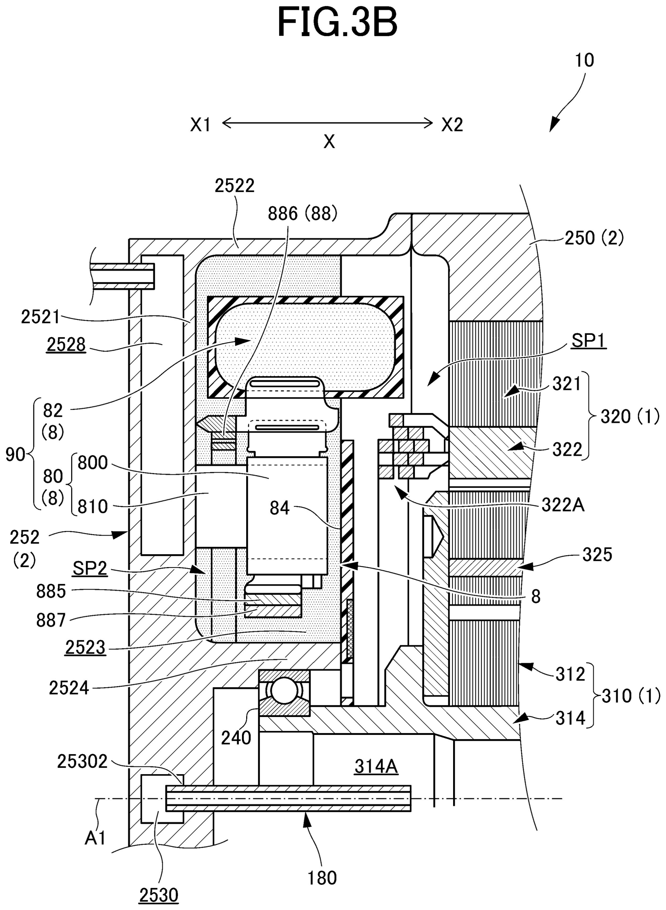

FIGS. 3A and 3B each are a cross-sectional view of relevant part of the vehicle drive device 10 of the present embodiment. FIG. 3A is a cross-sectional view through an oil passage 2530, and FIG. 3B is a cross-sectional view through a cooling water passage 2528.

The vehicle drive device 10 includes the rotary electric machine 1 described above, a case 2, and a motor drive device 8.

The vehicle drive device 10 is mounted in a vehicle as a part of the vehicle drive system 100, and generates a driving force for moving the vehicle forward or rearward as described above. Note that the vehicle may be in any form, and may be, for example, a four-wheeled automobile, a bus, a truck, a two-wheeled vehicle, a construction machine, or the like. Note that the vehicle drive device 10 may be mounted in the vehicle together with another drive source (for example, an internal combustion engine).

The rotary electric machine 1 includes a rotor 310 and a stator 320. FIGS. 3A and 3B each show part of one end side (X1 side), in the axial direction, of the rotary electric machine 1. The rotary electric machine 1 is of an inner rotor type, in which the stator 320 is provided to surround a radially outer side of the rotor 310. That is, the rotor 310 is disposed radially inward of the stator 320.

The rotor 310 includes a rotor core 312 and a shaft portion 314.

The rotor core 312 may be made of, for example, an annular magnetic stacked steel sheets. Permanent magnets 325 may be embedded in the rotor core 312. Alternatively, the permanent magnets 325 may be attached to an outer peripheral surface of the rotor core 312. Note that arrangement or the like is freely made for the permanent magnets 325. The rotor core 312 is fixed to an outer peripheral surface of the shaft portion 314, and rotates integrally with the shaft portion 314.

The shaft portion 314 is disposed on the first axis A1, and defines a rotation axis of the rotary electric machine 1 on the first axis A1. The shaft portion 314 is rotatably supported by a cover member 252 (described later) of the case 2 through a bearing 240, on the X1 side relative to the portion to which the rotor core 312 is fixed. Note that the shaft portion 314 is rotatably supported by the case 2 through a bearing corresponding to the bearing 240, on the other end side (X2 side), in the axial direction, of the rotary electric machine 1. In this manner, the shaft portion 314 may be rotatably supported by the case 2 at both ends in the axial direction.

The shaft portion 314 is, for example, in the form of a hollow pipe, and has a hollow interior 314A. The hollow interior 314A may extend across the entire length, in the axial direction, of the shaft portion 314. The hollow interior 314A can function as an axis oil passage. In this case, the shaft portion 314 may be formed with an oil hole for discharging oil to a coil end portion 322A of the stator 320, and the like.

The stator 320 includes a stator core 321 and stator coils 322.

The stator core 321 may be made of, for example, an annular magnetic stacked steel sheets. Teeth (not shown) projecting radially inward are formed in an inner peripheral portion of the stator core 321 in a radial configuration.

The stator coil 322 may be, for example, in the form of a conductor, having a rectangular cross section or a circular cross section, to which an insulation coating is applied. The stator coil 322 is wound around the teeth (not shown) of the stator core 321. Note that, for example, the stator coils 322 may be electrically connected by Y-connection or may be electrically connected by delta connection, in one or more parallel relationships.

The stator coils 322 include the coil end portions 322A each of which is a portion protruding outward in the axial direction from slots of the stator core 321. In the following description, unless otherwise specified, the coil end portion 322A refers to a portion of the stator coil 322 extending along a circumferential direction on the one end side (X1 side) in the axial direction, which is a lead side, out of portions of the stator coil 322 extending along the circumferential direction on both sides, in the axial direction, of the stator core 321.

The case 2 may be made of, for example, aluminum. The case 2 can be formed by, for example, casting or the like. The case 2 includes a motor case 250 and the cover member 252. The case 2 houses the rotary electric machine 1 and the motor drive device 8. In addition, in the case of the vehicle drive system 100 shown in FIG. 2, the case 2 may further house the drive transmission mechanism 7 as schematically shown in FIG. 2.

The motor case 250 forms a motor housing chamber SP1 housing the rotary electric machine 1. Note that the motor housing chamber SP1 may be an oil-tight space containing oil for cooling and/or lubricating the rotary electric machine 1 (and/or the drive transmission mechanism 7). The motor case 250 is in the form including a peripheral wall portion surrounding a radially outer side of the rotary electric machine 1. The motor case 250 may be implemented by combining a plurality of members. In addition, the motor case 250 may be integrated with another case member housing the drive transmission mechanism 7, on the other end side (X2 side) in the axial direction.

The cover member 252 is made of a material (for example, aluminum) having relatively high heat conductivity. The cover member 252 is coupled to one end side (X1 side), in the axial direction, of the motor case 250. The cover member 252 is in the form of a cover covering one end side (X1 side) in the axial direction in the motor housing chamber SP1, and faces the rotary electric machine 1 in the axial direction. In this case, the cover member 252 may cover an opening portion on the one end side (X1 side), in the axial direction, of the motor case 250 in a manner of completely or substantially completely closing the opening portion.

The cover member 252 forms an inverter housing chamber SP2 housing the motor drive device 8. Note that part of the inverter housing chamber SP2 may be formed by the motor case 250, or conversely, part of the motor housing chamber SP1 may be formed by the cover member 252.

The cover member 252 supports the motor drive device 8. For example, the motor drive device 8 may be attached to the cover member 252 in the form of a module to be described later. As a result, the cover member 252 and the motor case 250 can be coupled to each other after a part or the whole of the motor drive device 8 is assembled to the cover member 252, and assembling performance of the motor drive device 8 is improved.

The bearing 240, rotatably supporting the rotor 310, is provided on the cover member 252. That is, the cover member 252 includes a bearing support portion 2524 supporting the bearing 240. Note that the bearing support portion 2524 refers to an entirety of a portion in a range in the axial direction on which the bearing 240 is provided, in the cover member 252.

As shown in FIGS. 3A and 3B, the bearing 240 is provided on a radially outer side at an end portion on the X1 side of the shaft portion 314. Specifically, in the bearing 240, a radially outer side of an outer race is supported by the cover member 252, and a radially inner side of an inner race is supported by the outer peripheral surface of the shaft portion 314. Note that in a modification, conversely, in the bearing 240, the radially inner side of the inner race may be supported by the cover member 252, and the radially outer side of the outer race may be supported by an inner peripheral surface of the shaft portion 314.

As shown in FIGS. 3A and 3B, the cover member 252 includes a bottom portion 2521 having a circular shape about the first axis A1, and a peripheral wall portion 2522 protruding from an outer peripheral edge of the bottom portion 2521 toward the other end side (X2 side) in the axial direction. The bottom portion 2521 and the peripheral wall portion 2522 define the inverter housing chamber SP2. The bearing support portion 2524 is set at a central portion (portion about the first axis A1) on the other end side (X2 side) in the axial direction in the bottom portion 2521.

The inverter housing chamber SP2 may be a space. However, the inverter housing chamber SP2 is preferably sealed with a resin containing a filler having relatively high heat conductivity. That is, the cover member 252 preferably includes a molded resin portion 2523 having heat conductivity. In this case, the molded resin portion 2523 can have a function of sealing and supporting the motor drive device 8 to be described later, a function of protecting the motor drive device 8 from oil inside the motor housing chamber SP1, and a function of transferring heat from the motor drive device 8, to the cover member 252. Note that in each of FIGS. 3A and 3B, part of elements (an inverter module 90 and the like to be described later) sealed in the molded resin portion 2523 is shown in a see-through manner. A formation range of the molded resin portion 2523 is not limited to the range shown in FIG. 3A or the like, and may extend from the bottom portion 2521 side only to a range further directed toward the X1 side as compared with the range shown in FIG. 3A or the like, or may extend from the bottom portion 2521 side further toward the X2 side as compared with the range shown in FIG. 3A or the like.

Here, an example of a cooling structure applicable to the present embodiment will be described with reference to FIGS. 3A and 3B. Hereinafter, the terms "radial direction", "axial direction", and "circumferential direction" refer to respective directions with respect to the first axis A1, unless otherwise specified. That is, the axial direction is a direction parallel to the first axis A1 (including a direction along a line coaxial with the first axis A1), the radial direction is a direction passing through the first axis A1 and orthogonal to the first axis A1, and the circumferential direction is a direction around the first axis A1 in any plane orthogonal to the first axis A1. In addition, the expression "around the axis" refers to around the first axis A1.

In the example shown in each of FIGS. 3A and 3B, the cooling structure includes the cooling water passage 2528 and the oil passage 2530 (hereinafter, referred to as the "cover oil passage 2530") each formed in the cover member 252, the hollow interior 314A forming the axis oil passage, a tubular member 180, for supplying oil at the axis, through which the oil is supplied to the hollow interior 314A, and a tubular member 181 forming an oil passage through which the oil is supplied from above.

Cooling water flows through the cooling water passage 2528. Note that the cooling water may be, for example, water containing long life coolant (LLC). In this case, the cooling water flowing through the cooling water passage 2528 can be maintained at a relatively low temperature by being subjected to heat dissipation through a radiator (not shown) mounted in the vehicle.

The cooling water passage 2528 may have any form as viewed in the axial direction, and may have, for example, an annular form, a spiral form, or a form extending along the circumferential direction while meandering outward and inward in the radial direction. Note that in a case where the cover member 252 is manufactured using a core or the like, flexibility in the shape or the like of the cooling water passage 2528 can be increased.

Oil flows through the cover oil passage 2530. The oil is supplied to the cover oil passage 2530 from an oil pump (not shown). The oil pump may be, for example, a mechanical type that operates in conjunction with the drive transmission mechanism 7, or an electric type.

The cover oil passage 2530 may overlap the cooling water passage 2528 as viewed in the radial direction. In this case, as compared with a case in which the cover oil passage 2530 and the cooling water passage 2528 do not overlap each other as viewed in the radial direction, the thickness of the cover member 252 (the thickness of the bottom portion 2521 in the axial direction) can be reduced, and the physical size of the vehicle drive device 10 in the axial direction can be reduced.

The oil supplied to the cover oil passage 2530 is supplied to the tubular member 180 after the oil passes through the cover oil passage 2530. The tubular member 180 is in the form of a hollow tube, and the interior thereof forms a flow passage. The tubular member 180 may extend in the axial direction concentrically with the first axis A1 and both ends thereof in the axial direction may be opened. As shown in FIG. 3A, the tubular member 180 is connected to the cover oil passage 2530 (an outlet portion 25302 on the axis side), on the X1 side, and extends in the axial direction toward the X2 side into the hollow interior 314A, and an opening of the tubular member 180 at an end portion on the X2 side communicates with the hollow interior 314A.

The oil supplied to the tubular member 180 is supplied to the axis oil passage (hollow interior 314A). The oil supplied to the hollow interior 314A flows along the inner peripheral surface of the shaft portion 314 by the action of a centrifugal force during rotation of the rotor 310, and cools the rotor core 312 and accordingly the permanent magnet 325 from an inner side in the radial direction. In addition, by forming an oil hole in the radial direction in the shaft portion 314, the oil can be discharged from the inner side in the radial direction toward the coil end portion 322A (the same applies to the not-shown coil end portion 322A on the X2 side, the same applies hereinafter). In this case, the coil end portion 322A can be cooled from the inner side in the radial direction.

Further, the oil supplied to the cover oil passage 2530 is supplied to the tubular member 181 after the oil passes through the cover oil passage 2530. The tubular member 181 is in the form of a hollow tube, and the interior thereof forms a flow passage. The tubular member 181 may extend in the axial direction on an outer side in the radial direction relative to the stator 320 as viewed in the axial direction, and both ends of the tubular member 181 in the axial direction may be opened.

The oil supplied to the tubular member 181 drops onto the stator 320 through an oil hole 1810 in the radial direction formed in the tubular member 181 by the action of gravity. The oil having dropped onto the stator 320 flows downward along an outer peripheral surface of the stator 320, and the like. As a result, the stator 320 can be cooled from an outer side in the radial direction.

The oil hole 1810 of the tubular member 181 may include, for example, an oil hole 1810A facing the coil end portion 322A in the radial direction. With this, the coil end portion 322A can be cooled from the outer side in the radial direction.

In addition, the oil hole 1810 of the tubular member 181 may include an oil hole 1810B facing an outer peripheral surface of the stator core 321 in the radial direction. With this, the stator core 321 (and the stator coil 322) can be cooled from the outer side in the radial direction.

Note that, here, a specific cooling structure has been described as an example with reference to FIGS. 3A and 3B, but the cooling structure has any detailed configuration. For example, the tubular member 180 and/or the tubular member 181, and the like may be omitted. Alternatively, oil cooling itself may be omitted.

In the present embodiment, the motor drive device 8 includes power modules 80, capacitor modules 82, a control board 84, and a wiring part 88.

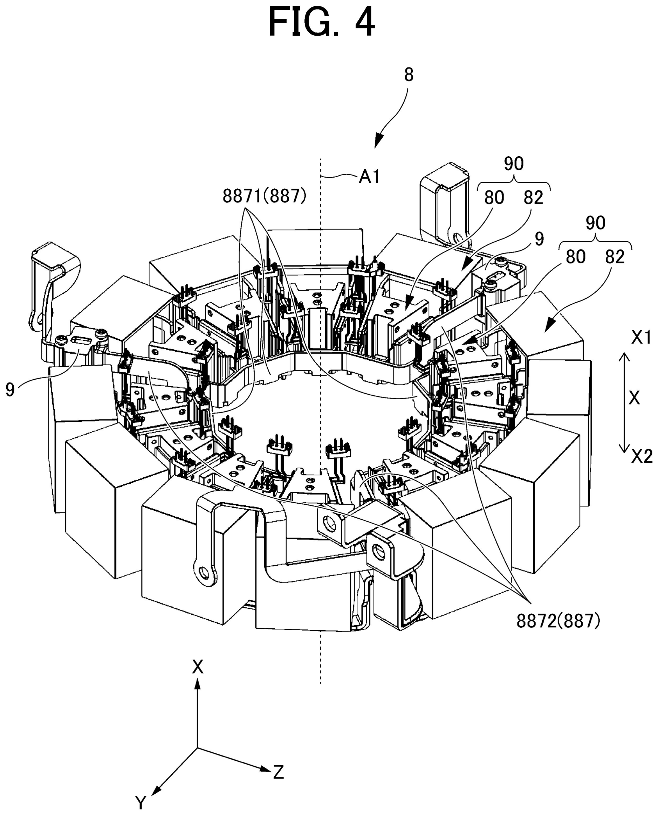

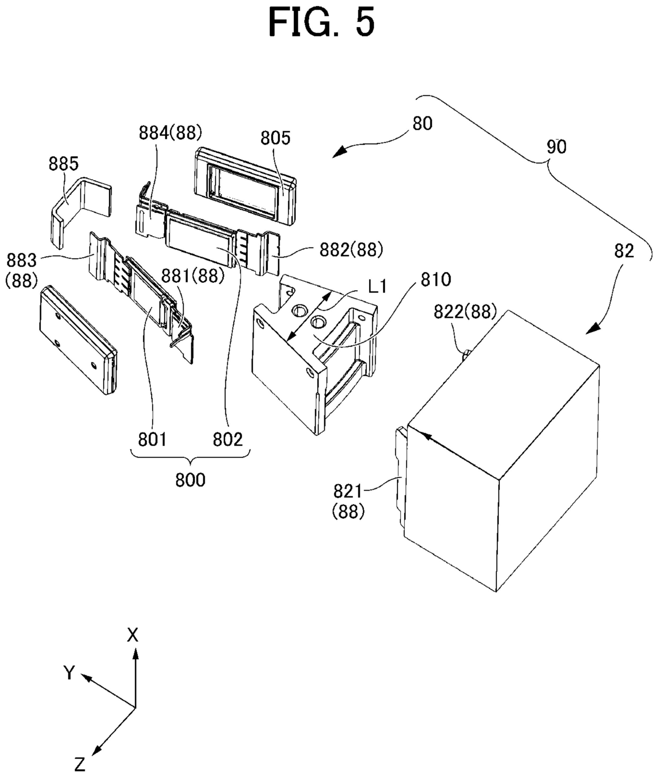

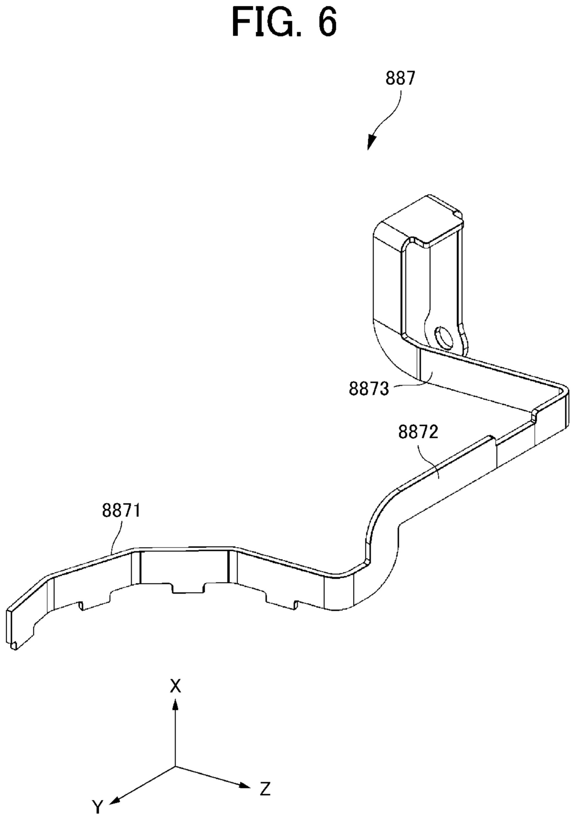

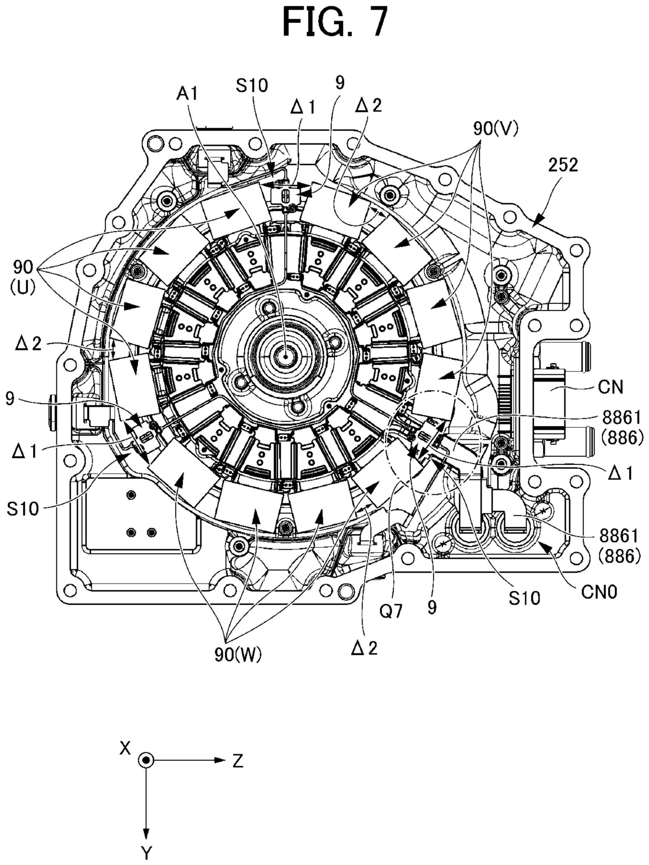

FIG. 4 is a perspective view of the motor drive device 8 according to the present embodiment as viewed from the X1 side. FIG. 5 is an explanatory view of each component of the motor drive device 8 according to the present embodiment. FIG. 6 is a perspective view of one output bus bar 887 in a state of being shown alone. FIG. 7 is a plan view showing part on an X1 side (a negative side in the X-direction) relative to the rotary electric machine 1, in the vehicle drive device 10 according to the present embodiment, as viewed in the axial direction. Note that in FIGS. 4 and 5, illustration of the control board 84 and part of the wiring part 88 is omitted. In FIG. 4 and the like, three axes (X-axis, Y-axis, Z-axis) orthogonal to each other in the right-handed coordinate system are shown. The X-axis is the same as the X-axis defined in FIG. 2 and the like, and the negative side of the X-axis in triaxial representation in FIG. 4 and the like corresponds to the X1 side of the X-axis defined in FIG. 2 and the like.

In the present embodiment, as shown in FIGS. 4 and 5, the power modules 80 and the capacitor modules 82 are disposed along the circumferential direction while forming a plurality of sets (in the example shown in FIGS. 4 and 5, 12 sets). The number of sets of the power modules 80 and the capacitor modules 82 may be changed in accordance with the specifications of the rotary electric machine 1. Basically, as the number of sets of the power modules 80 and the capacitor modules 82 increases, the output of the rotary electric machine 1 increases. Therefore, when the rotary electric machine 1 is designed, it is possible to set a plurality of variations with the different numbers of sets of the power modules 80 and the capacitor modules 82 (and accordingly the different outputs of the rotary electric machine 1).

The power modules 80 and the capacitor modules 82 are annularly arranged around the axis, in units of sets. Preferably, the power modules 80 and the capacitor modules 82 of the same phase are adjacently arranged in the circumferential direction to form each single-phase module group. That is, the sets of the power modules 80 and the capacitor modules 82 are grouped for each phase to form a corresponding one of the single-phase module groups, and the sets of the power modules 80 and the capacitor modules 82 are arranged to be annularly distributed around the axis. In this case, the sets of the power modules 80 and the capacitor modules 82 may be arranged at equal pitches, for example. In the illustrated example, the number of sets of the power modules 80 and the capacitor modules 82 is 12, and the 12 sets are arranged at pitches of 30 degrees. Thus, it is possible to equalize a temperature distribution along the circumferential direction due to heat from the power modules 80 and the capacitor modules 82.

However, in the present embodiment, as a more preferable example, the sets of the power modules 80 and the capacitor modules 82 are arranged in such a manner that a distance of a gap in the circumferential direction between the single-phase module groups (hereinafter referred to as an "inter-module distance Δ1 between phases") becomes relatively wide. That is, in the present embodiment, the inter-module distance Δ1 between phases is significantly longer than an interval Δ2 in the circumferential direction between the sets of the power modules 80 and the capacitor modules 82 in the same phase (hereinafter referred to as an "inter-module distance Δ2 in a phase"). In this case, by using the inter-module distance Δ1 between phases that is relatively wide, it is possible to achieve preferable arrangement of current sensors 9 as described later, the formation of the cooling water passage 2528, and the like. Note that the inter-module distance Δ2 in a phase may be uniform (constant) in each phase.

Hereinafter, a space that is a space between the groups of the sets of the power modules 80 and the capacitor modules 82 grouped by phase, and that is a space in the circumferential direction related to the inter-module distance Δ1 between phases is also referred to as an "inter-phase inter-module space S10". Note that three inter-phase inter-module spaces S10 are formed at intervals of 120 degrees in the circumferential direction, because, for respective three phases, there are three groups of the sets of the power modules 80 and the capacitor modules 82 grouped by phase.

The power module 80 and the capacitor module 82 are preferably in the form of an integrated assembly in each of the plurality of sets. That is, the power module 80 and the capacitor module 82 in each set form an integrated inverter module 90.

Across the inverter modules 90, the respective power modules 80 have the same configuration, and the respective capacitor modules 82 have the same configuration (electrical characteristics, shape, and the like). Thus, replacement and maintenance can be made for each of the inverter modules 90, and versatility can be increased. In the present embodiment, in each of the inverter modules 90, the power module 80 includes a sub-module 800 and a heat dissipation member 810. In this case, across the inverter modules 90, the respective sub-modules 800 have the same configuration (electrical characteristics, shape, and the like), and the respective heat dissipation members 810 have the same configuration (material, shape, and the like). Thus, when the plurality of inverter modules 90 are arranged along the circumferential direction, it is not necessary to consider which inverter module 90 is to be arranged at which position in the circumferential direction. Thus, assembling performance is improved.

Note that in the present embodiment, as described above, among the 12 inverter modules 90, the four U-phase inverter modules 90 are adjacently arranged in a group in the circumferential direction, the four V-phase inverter modules 90 are adjacently arranged in a group in the circumferential direction, and the four W-phase inverter modules 90 are adjacently arranged in a group in the circumferential direction.

Each of the sub-modules 800 forms upper and lower arms for a corresponding one of the phases in the inverter INV (see FIG. 1). Thus, a sub-module can be formed for each set of upper and lower arms, and wiring efficiency is improved. Specifically, among 12 sets, each of the sub-modules 800 in the power modules 80 in four sets forms upper and lower arms for the U-phase, each of the sub-modules 800 in the power modules 80 in another four sets forms upper and lower arms for the V-phase, and each of the sub-modules 800 in the power modules 80 in still another four sets forms upper and lower arms for the W-phase.

In addition, in each of the inverter modules 90, the sub-module 800 includes a pair of power semiconductor chips 801, 802. Specifically, the pair of power semiconductor chips 801, 802 includes a power semiconductor chip 801 forming an upper arm on the high potential side P and a power semiconductor chip 802 forming a lower arm on the low potential side N. Each of the power semiconductor chips 801, 802 includes the power switching element described above.

As shown in FIG. 5, the power semiconductor chip 801 and the power semiconductor chip 802 are preferably integrated with the heat dissipation member 810. Thus, the power module 80 described above integrally includes the heat dissipation member 810, and therefore heat of the pair of power semiconductor chips 801, 802 can be efficiently dissipated through the heat dissipation member 810. In addition, assembling performance can be increased as compared with a case in which the pair of power semiconductor chips 801, 802 and the heat dissipation member 810 are separately assembled to the cover member 252 or the capacitor module 82.

Further, as shown in FIG. 5, the power semiconductor chip 801 and the power semiconductor chip 802 include bus bars 881, 882, 883, 884 as portions of the wiring part 88 together with resin molded portions 805. The bus bar 881 integrated with the power semiconductor chip 801 electrically connects the power semiconductor chip 801 and the capacitor module 82 (for example, a capacitor bus bar 821 in FIG. 5). In addition, the bus bar 883 integrated with the power semiconductor chip 801 electrically connects the power semiconductor chip 801 and the stator coil 322 of a corresponding phase in the rotary electric machine 1. Similarly, the bus bar 882 integrated with the power semiconductor chip 802 electrically connects the power semiconductor chip 802 and the capacitor module 82 (for example, a capacitor bus bar 822 in FIG. 5). In addition, the bus bar 884 integrated with the power semiconductor chip 802 electrically connects the power semiconductor chip 802 and the stator coil 322 of a corresponding phase in the rotary electric machine 1. In the present embodiment, the bus bar 883 and the bus bar 884 are connected to one end of the output bus bar 887 (see FIGS. 4 and 6, and the like) through a connection bus bar 885. The other end of the output bus bar 887 is electrically connected to the stator coil 322 of a corresponding phase in the rotary electric machine 1.

In the present embodiment, the pair of power semiconductor chips 801, 802 are joined to side surfaces of the heat dissipation member 810 in the circumferential direction. In this case, the power semiconductor chip 801 is joined to a side surface (surface) on one side, in the circumferential direction, of the heat dissipation member 810, and the power semiconductor chip 802 is joined to a side surface (surface) on the other side, in the circumferential direction, of the heat dissipation member 810. Note that any joining method is used, and a relatively high heat conductive adhesive material or the like may be used. As a result, the heat dissipation member 810 can efficiently receive heat from the pair of power semiconductor chips 801, 802 through the side surfaces in the circumferential direction. In addition, the pair of power semiconductor chips 801, 802 can be disposed by efficiently using spaces each between the heat dissipation members 810 adjacent in the circumferential direction.

The heat dissipation member 810 is made of a material (for example, aluminum) having relatively high heat conductivity. The heat dissipation member 810 has a function of efficiently receiving heat from the sub-module 800 and efficiently transmitting the received heat to the cover member 252 (and the cooling water in the cooling water passage 2528).

As shown in FIGS. 4 and 5, the heat dissipation member 810 preferably has a form whose width in the circumferential direction decreases toward an inner side in the radial direction, as viewed in the axial direction. That is, in the heat dissipation member 810, preferably, a distance L1 between the side surfaces in the circumferential direction to which the pair of power semiconductor chips 801, 802 are joined is smaller on a side, in the radial direction, closer to the first axis A1 than on a side, in the radial direction, farther from the first axis A1. Thus, even in a case where the number of sets of the power modules 80 and the capacitor modules 82 (that is, the number of inverter modules 90) is relatively increased while the heat dissipation members 810 are arranged on an inner side in the radial direction relative to the capacitor modules 82, the layout of the heat dissipation members 810 can be relatively easily established.

Note that the heat dissipation member 810 may be formed with a flow passage communicating with the cooling water passage 2528. Alternatively, the heat dissipation member 810 may be in the form of a hollow shape, and a tubular member communicating with the cooling water passage 2528 may be passed through the interior of the heat dissipation member 810.

The capacitor module 82 is in the form of a module forming the smoothing capacitor C (see FIG. 1). The capacitor module 82 may have a form in which a capacitor element forming the smoothing capacitor C and the capacitor bus bars 821, 822 of the wiring part 88 are sealed with resin. Note that in the capacitor bus bars 821, 822, respective end portion exposed from a sealing resin portion each form a corresponding one of a high-potential-side terminal of the capacitor element and a low-potential-side terminal of the capacitor element. The capacitor bus bars 821, 822 are connected to the sub-module 800, and are connected to a power supply bus bar 886 (see FIGS. 3A and 3B).

In each of the inverter modules 90, the capacitor module 82 forms the smoothing capacitor C (see FIG. 1) electrically connected in parallel between the high potential side P and the low potential side N of the sub-module 800 in a corresponding set.

In the present embodiment, the capacitor module 82 is arranged outward, in the radial direction, of the power module 80. With this arrangement, as compared with a case in which the capacitor module 82 is arranged inward, in the radial direction, of the power module 80, a circumferential direction range in which the capacitor modules 82 can be disposed is widened, and the physical size of the capacitor module 82 is easily increased. For example, even in a case where the number of sets of the power modules 80 and the capacitor modules 82 is relatively increased, the capacitor module 82 having a relatively large physical size can be achieved. As a result, it is easy to accept an increase in output of the rotary electric machine 1.

In addition, in the present embodiment, the extending range of the capacitor module 82 in the axial direction overlaps the extending range of the power module 80 in the axial direction, as shown in FIGS. 3A and 3B. In particular, in the present embodiment, the sub-module 800 of the power module 80 overlaps the capacitor module 82, as viewed in the radial direction. Thus, the capacitor module 82 and the sub-module 800 can be disposed between the cover member 252 and the rotary electric machine 1 in the axial direction, while the physical size of the vehicle drive device 10 in the axial direction is minimized.

The control board 84 forms a part or the whole of the control device 500 (see FIG. 1). The control board 84 may be formed of, for example, a multilayer printed board. The control board 84 may be fixed to the cover member 252. The control board 84 is disposed in an orientation in which a normal direction to a board surface thereof is along the axial direction. Thus, the control board 84 can be disposed using a small gap in the axial direction. For example, in the present embodiment, the control board 84 may be disposed between the rotary electric machine 1 and the power module 80 in the axial direction, as shown in FIGS. 3A and 3B. More specifically, the control board 84 may be disposed between the coil end portion 322A of the rotary electric machine 1 and the power module 80 in the axial direction. With this, it is possible to achieve efficient arrangement using a space that may otherwise tend to be a dead space. In addition, the control board 84 can extend outward in the radial direction to a position in the radial direction overlapping the coil end portion 322A as viewed in the axial direction, and thus an area (formation range of a circuit portion) of the control board 84 can be maximized. Note that an external electronic control unit (ECU) or the like may be connected to the control board 84 through a connector CN (see FIG. 7).

The wiring part 88 includes the capacitor bus bars 821, 822 described above, the bus bars 881, 882, 883, 884 described above, the power supply bus bar 886 (see FIG. 3A and the like), and the output bus bars 887.

The power supply bus bar 886 may be in the form of, for example, an annular shape, and extends around the first axis A1. In the present embodiment, the power supply bus bar 886 extends in the circumferential direction and between the cover member 252 and the sub-module 800 in the axial direction, in a manner adjacent to the sub-module 800 from the X1 side. Thus, the power supply bus bar 886 can be efficiently cooled by the cover member 252 (and the cooling water in the cooling water passage 2528).

As shown in FIG. 7, in the power supply bus bar 886, a portion 8861 for connection to a power supply connector CN0 on the power supply side may extend in the radial direction. In this case, the portion 8861 extends in the radial direction through the inter-phase inter-module space S10 (that is, the space between the per-phase groups related to the inverter modules 90).

The output bus bar 887 is provided for each phase. The output bus bar 887 is a bus bar connecting each power module 80 and the rotary electric machine 1. As shown in FIG. 6, the output bus bar 887 includes an arc-shaped portion 8871, a straight-shaped portion 8872, and an extended portion 8873.

For example, as shown in FIG. 4, in the output bus bar 887, the arc-shaped portion 8871 may be arranged around the axis on an inner side, in the radial direction, of the inverter modules 90. In this case, the output bus bar 887 for one phase extends in a circumferential direction range corresponding to an extending range, in the circumferential direction, of the group of the inverter modules 90 for this phase (thus, a circumferential direction range of approximately 120 degrees). In this manner, the arc-shaped portions 8871 of the three output bus bars 887 are circularly arranged around the axis in a manner not overlapping each other in the circumferential direction. In this case, the arc-shaped portion 8871 of the output bus bar 887 is in contact, in the radial direction, with the connection bus bar 885 described above, on the inner side, in the radial direction, of the inverter modules 90, whereby the arc-shaped portion 8871 can be electrically connected to the power modules 80 of the corresponding inverter modules 90.

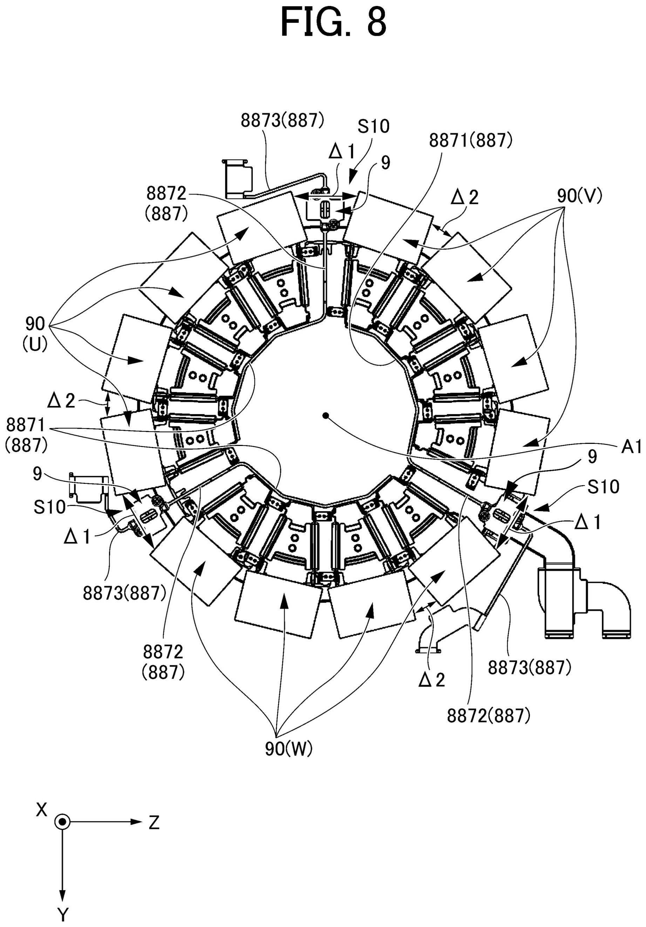

In addition, in the output bus bar 887, the straight-shaped portion 8872 extends in the radial direction through the inter-phase inter-module space S 10 (that is, the space between the per-phase groups related to the inverter modules 90). Note that, as described above, there are the three inter-phase inter-module spaces S 10, and thus each of the straight-shaped portions 8872 of the three output bus bars 887 can extend in the radial direction through any corresponding one of the three inter-phase inter-module spaces S10 on a one-by-one basis, as specifically shown in FIG. 8.

According to such a configuration, the output bus bars 887 for the respective phases can have the same shape in the arc-shaped portions 8871 and the straight-shaped portions 8872. Thus, the cost can be reduced through commonality of components.

Note that although not shown in FIG. 4 and the like, in the output bus bar 887 for each phase, an end portion on an outer side, in the radial direction, of the straight-shaped portion 8872 is electrically connected, through the extended portion 8873, to the stator coil 322 of the corresponding phase in the rotary electric machine 1. In this instance, the extended portions 8873 may also have the same shape across the phases. In this case, the output bus bars 887 for the respective phases can have the same shape such that one piece of the output bus bar 887 is provided per phase, and the cost can be reduced through commonality of components.

Next, a preferable arrangement and the like of the current sensors 9 will be described with reference to FIG. 8 and the subsequent drawing.

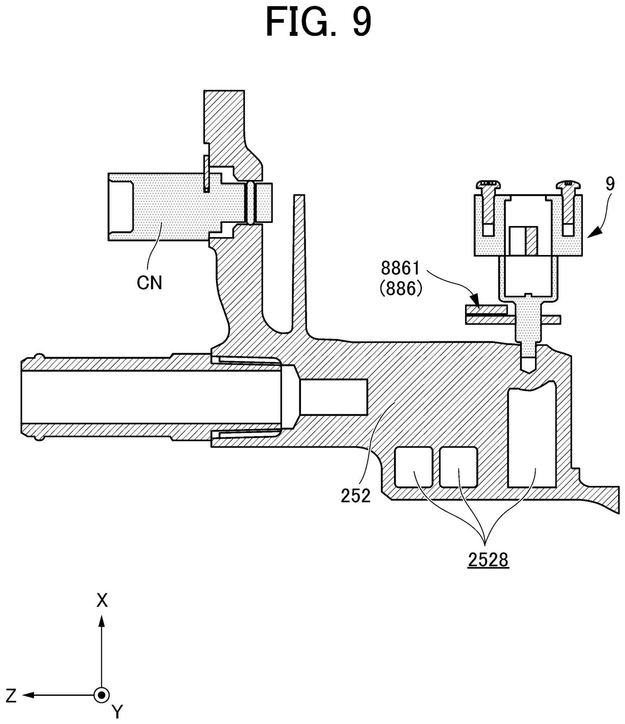

FIG. 8 is a plan view in which components of the electric system mainly remain shown while other components are omitted, with respect to the view shown in FIG. 7. FIG. 9 is a cross-sectional view as taken along an XZ plane passing through the current sensor 9, in and in the vicinity of part Q7 in FIG. 7.

The current sensor 9 is provided for each phase. Each of the current sensors 9 generates an electric signal corresponding to a current flowing through a corresponding one of the output bus bars 887 for a corresponding one of the phases. Note that the current sensor 9 may or may not be a coreless type having no magnetic core. Note that the current sensor 9 may be fixed to the control board 84 (not shown in FIG. 9). In this case, sensor information from the current sensor 9 can be easily transmitted using printed wiring or the like on the control board 84.

Similarly to the straight-shaped portion 8872 of the output bus bar 887, the current sensor 9 is disposed in the inter-phase inter-module space S 10 (that is, the space between the per-phase groups related to the inverter modules 90). In this case, each of the current sensors 9 for the respective phases is disposed in any corresponding one of the three inter-phase inter-module spaces S10 on a one-by-one basis.

In this manner, in the present embodiment, each of the output bus bars 887 for the respective phases and each of the current sensors 9 for the respective phases are disposed in any corresponding one of the three inter-phase inter-module spaces S10, on a one-set-by-one-set basis. As a result, it is possible to achieve efficient arrangement of the current sensors 9 using the inter-phase inter-module spaces S10. In addition, since the inter-phase inter-module spaces S10 are arranged at pitches of 120 degrees in the circumferential direction, the current sensors 9 of the respective phases are arranged around the axis at pitches of 120 degrees. Thus, the current sensors 9 of the respective phases can be arranged apart from each other and the output bus bars 887 of the respective phases can be arranged apart from each other, in the circumferential direction. As a result, it is possible to prevent inconvenience that may occur in a case where the current sensors 9 of the respective phases are gathered in the same circumferential direction range (that is, a decrease in reliability for the sensor information from the current sensor 9 due to reception of influence of disturbance from other phases). In addition, it is possible to reduce inconvenience in a case where the output bus bars 887 for the respective phases are arranged close to each other in the circumferential direction (for example, inconvenience regarding allocation of a space or the like for maintaining electrical insulation).

In the present embodiment, each of the current sensors 9 is preferably disposed at a corresponding one of radial direction positions each overlapping the capacitor module 82 (smoothing capacitor C) in the circumferential direction around the axis. That is, an extending range of the current sensor 9 in the radial direction overlaps an extending range of the capacitor module 82 in the radial direction. As a result, as compared with a case (not shown) in which each of the current sensors 9 is disposed at a corresponding one of radial direction positions overlapping the power modules 80, influence from the power modules 80 that can be given to the current sensors 9 can be reduced. That is, each of the current sensors 9 can be disposed at a position that is hardly affected by switching noise or the like from the power module 80. From such a viewpoint, each of the current sensors 9 may be disposed in a corresponding one of the inter-phase inter-module spaces S10 such that the current sensor 9 is entirely located at a position on an outer side in the radial direction relative to the radially outermost position of the power module 80 and on an inner side in the radial direction relative to the radially outermost position of the capacitor module 82.

Further, in the present embodiment, at least one of the three current sensors 9 preferably overlaps the cooling water passage 2528 as viewed in the axial direction, as shown in FIG. 9. Thus, the current sensor 9 overlapping the cooling water passage 2528 as viewed in the axial direction can be cooled by the cooling water in the cooling water passage 2528. In addition, among the output bus bars 887 of the three phases, the output bus bar 887 on which the current sensor 9 overlapping the cooling water passage 2528 is provided can be cooled by the cooling water in the cooling water passage 2528. In this instance, a water passage portion, in the cooling water passage 2528, overlapping the current sensor 9 may extend to a positive side in the Y-direction relative to the other water passage portions, as shown in FIG. 9. In this case, the current sensor 9 and the output bus bar 887 can be efficiently cooled.

Note that the water passage portion, in the cooling water passage 2528, overlapping the current sensor 9 may cross with respect to the inter-phase inter-module space S10 in the circumferential direction, as viewed in the axial direction, or may extend in the radial direction similarly to the inter-phase inter-module space S10, as viewed in the axial direction. In either case, the portion 8861 of the power supply bus bar 886 described above, and the like as well as the current sensor 9 can be efficiently cooled by the cooling water in the water passage portion, in the cooling water passage 2528, overlapping the current sensor 9. Note that in the example shown in FIG. 9, the current sensor 9 is attached to the cover member 252 while passing through the portion 8861 of the power supply bus bar 886. In this case, the power supply bus bar 886 whose temperature is relatively easily increased can be cooled with priority over the current sensor 9.

Although the embodiments have been described above in detail, the present disclosure is not limited to any particular embodiment, and various modifications and changes can be made within the scope of the claims. In addition, all or some of the constituent elements of the embodiments described above can be combined.

For example, in the embodiment described above, the cooling water passage 2528 is formed in the cover member 252. However, a portion or an entirety of the cooling water passage 2528 may be formed in a member different from the cover member 252. For example, a portion or an entirety of the cooling water passage 2528 may be formed of a tubular pipe that may extend into the motor case 250.

### REFERENCE SIGNS LIST

10: Vehicle drive device, 1: Rotary electric machine, 887: Output bus bar (bus bar), 9: Current sensor, 90: Inverter module (inverter device, module), 252: Cover member (water passage forming member), 2528: Cooling water passage, 801, 802: Power semiconductor chip (power switching element), C: Smoothing capacitor, and A1: First axis (axis)

## Claims

1. A vehicle drive device comprising:
a rotary electric machine having a rotation axis on an axis;
a plurality of modules arranged on one side, in an axial direction, of the rotary electric machine and arranged in an annular configuration about the axis, the plurality of modules forming an inverter device configured to supply alternating-current power of a plurality of phases to the rotary electric machine, the plurality of modules being provided two or more for each of the plurality of phases;
a plurality of bus bars connecting the plurality of modules to the rotary electric machine, the plurality of bus bars being provided one or more for each of the plurality of phases; and
current sensors each provided for a corresponding one of the plurality of bus bars each for a corresponding one of the plurality of phases, the current sensors each being configured to generate an electric signal corresponding to a current flowing through the corresponding one of the plurality of bus bars,
wherein
the plurality of modules of a same one of the plurality of phases are adjacently arranged in a circumferential direction to form a single-phase module group, and
each of the plurality of bus bars and each of the current sensors, each for a corresponding one of the plurality of phases, are arranged in a corresponding different one of a plurality of inter-phase inter-module spaces that are gaps in the circumferential direction between a plurality of the single-phase module groups.

2. The vehicle drive device according to claim 1, wherein
each of the plurality of modules includes a power switching element and a smoothing capacitor in a manner in which the power switching element is located on an inner side, in a radial direction, of the smoothing capacitor, and
each of the current sensors each for a corresponding one of the plurality of phases is disposed at a corresponding one of radial direction positions each overlapping a corresponding one of a plurality of the smoothing capacitors.

3. The vehicle drive device according to claim 1 or 2, wherein with respect to distances along the circumferential direction about the axis, a distance of each of the plurality of inter-phase inter-module spaces is longer than an inter-module distance in a same one of the plurality of phases.

4. The vehicle drive device according to claim 3, further comprising a water passage forming member forming a cooling water passage through which cooling water flows,
wherein
the cooling water passage extends in a radial direction through a circumferential direction range overlapping one of the plurality of inter-phase inter-module spaces as viewed in the axial direction.

5. The vehicle drive device according to claim 4, wherein one of the current sensors that is for one of the plurality of phases overlaps the cooling water passage as viewed in the axial direction.

6. The vehicle drive device according to claim 3, wherein each of the plurality of bus bars each for a corresponding one of the plurality of phases extends in the circumferential direction about the axis, on an inner side, in a radial direction, of the plurality of modules.
